# EUROPEAN PATENT APPLICATION

(11) **EP 4 814 321 A1**
(43) Date of publication of application: **30.09.2026**
(21) Application number: 24894139.5
(22) Date of filing: 19.11.2024
(51) Int. Cl.: F16B 7/04, E04B 1/58, F16B 2/04, F16B 7/18

(54) **FASTENER**

(30) Priority: 20.11.2023 JP 2023196360
(71) Applicant: Sus Corporation, Shizuoka-shi, Shizuoka 422-8067 (JP)
(72) Inventor: OSADA, Nobuyuki, Kikugawa-shi, Shizuoka 439-0037 (JP)
(74) Representative: Grünecker Patent- und Rechtsanwälte PartG mbB
(86) International application number: PCT/JP2024/040939
(87) International publication number: WO 2025/110148

(57) **Abstract**

The purpose of the present invention is to provide a fastener that enables stronger fastening when joining, from an orthogonal direction, a second structural member having a groove to a first structural member having a groove. Provided is a fastener for joining a first structural member and a second structural member together, the first structural member having a quadrilateral cross-sectional shape and a groove formed on each side, the second structural member having similarly a quadrilateral cross-sectional shape and a groove formed on each side and being disposed on the first structural member from an orthogonal direction. The fastener is configured to comprise: a first bracket installed at a corner section between the first structural member and the second structural member; a second bracket that is inserted into the groove of the second structural member to engage a head of the second bracket with a groove section of an end surface of the first structural member; a first bolt that is screwed from the first bracket side to the first structural member side; and a second bolt that is screwed from the first bracket side to the second bracket through the second structural member.

## Description

### TECHNICAL FIELD

The present invention relates to a fastener used when coupling a second structural member provided with a groove, with a first structural member provided with a groove, from an orthogonal direction, and in particular, the present invention relates to the fastener that allows fastening more securely.

### BACKGROUND ART

Patent Document 1 discloses an example of this type of fastener. Patent Document 1 describes a fastener having a configuration as below. First, an end surface of a structural member abuts a side surface of another structural member from an orthogonal direction, and a bracket in a triangular shape is provided at a corner section between these structural members. Each of a pair of oblique sides of the bracket abuts the side surface of the corresponding structural member.

Each of the pair of oblique sides has a through hole formed therein, into which a bolt is inserted. A groove is formed in the side surface of the structural member, and a nut is installed internally. Each of the bolts is screwed into each of the nuts, respectively. Thus, the structural members are fastened and fixed to each other by the fastener.

Note that, Patent Document 1 was filed by the applicant of the present patent application.

### REFERENCE DOCUMENTS OF CONVENTIONAL ART

### PATENT DOCUMENT(S)

Patent Document 1: Official Gazette, Japan Patent No. 6391210.

### SUMMARY OF THE INVENTION

### PROBLEMS TO BE SOLVED BY INVENTION

However, the configurations according to the conventional art described above has following problem.

That is, the fastening is performed by bolts and nuts, each of the oblique sides of the bracket becomes in tight contact with and fixed on the corresponding side surface of each of the structural members, but this fastening configuration does not bind the tight contact between the end surface of the structural member and the side surface of the other structural member, and consequently, there has been a problem of effect caused by external force, which results in formation of a gap.

In the light of the above problem, it is an object of the present invention to provide a fastener, that allows fastening more securely when coupling a second structural member provided with a groove, with a first structural member provided with a groove, from an orthogonal direction.

### MEANS TO SOLVE THE PROBLEM

To achieve the objects mentioned above, according to Claim 1 of the present invention, with regard to a fastener for coupling a first structural member, in a quadrilateral cross-sectional shape and having a groove formed in each of sides of the first structural member, with a second structural member, similarly in a quadrilateral cross-sectional shape and having a groove formed in each of sides of the second structural member, in an arrangement that the second structural member is disposed from a direction orthogonal to the first structural member, the fastener is provided with: a first bracket provided at a corner section between the first structural member and the second structural member; a second bracket, inserted into the groove of the second structural member, and of which head is engaged with the groove at an end surface of the first structural member; a first bolt screwed from a side of the first bracket side into a side of the first structural member; and a second bolt screwed from a side of the first bracket into a side of the second bracket through the second structural member.

Moreover, according to the fastener of Claim 2, with regard to the fastener as claimed in Claim 1, the second structural member is disposed with existence of a gap from the first structural member, and the first bracket is protrusively provided with an insertion part to be inserted into the gap.

Moreover, according to the fastener of Claim 3, with regard to the fastener as claimed in Claim 2, a recess is formed at a tip of the insertion part, and a base-closer part of the head of the second bracket is engaged with the recess.

Moreover, according to the fastener of Claim 4, with regard to the fastener as claimed in Claim 1, a nut is installed internally in a groove of the first structural member on a side of the first bracket, and the first bolt is screwed into the nut.

Moreover, according to the fastener of Claim 5, with regard to the fastener as claimed in Claim 1, a female thread part is provided in the second bracket, and the second bolt is screwed into the female thread part.

Moreover, according to the fastener of Claim 6, with regard to the fastener as claimed in Claim 1, a shaft part is protrusively provided on the second bracket, and the second bolt is screwed into the shaft part.

Moreover, according to the fastener of Claim 7, with regard to the fastener as claimed in Claim 1, each of the first structural member and the second structural member is in a square cross-sectional shape, and has a T-shaped groove formed in each of four sides.

And moreover, according to the fastener of Claim 8, with regard to the fastener as claimed in Claim 3, a tapered part is formed at a bottom of the recess, a protrusion is formed on the second bracket to be engaged with the recess, and another tapered part is formed in the protrusion to be engaged with the tapered part, and because of synergetic effect by each of the tapered parts, the insertion parts and the second brackets are caused to be drawn toward each other.

### EFFECT OF THE INVENTION

As described above, according to Claim 1 of the present invention, with regard to a fastener for coupling a first structural member, in a quadrilateral cross-sectional shape and having a groove formed in each of sides of the first structural member, with a second structural member, similarly in a quadrilateral cross-sectional shape and having a groove formed in each of sides of the second structural member, in an arrangement that the second structural member is disposed from a direction orthogonal to the first structural member, the fastener is provided with: a first bracket provided at a corner section between the first structural member and the second structural member; a second bracket, inserted into the groove of the second structural member, and of which head is engaged with the groove at an end surface of the first structural member; a first bolt screwed from a side of the first bracket side into a side of the first structural member; and a second bolt screwed from a side of the first bracket into a side of the second bracket through the second structural member. Therefore, with the screw engagement of the first bolt, the oblique side of the first bracket becomes in tight contact with and fixed on the side surface of the first structural member, and with the screw engagement of the second bolt, the oblique side of the first bracket becomes in tight contact with and fixed on the side surface of the first structural member, and furthermore, with the screw engagement of the second bolt with the second bracket as well as with the engagement of the head of the second bracket with the groove at the end surface of the first structural member, it is possible to prevent formation of gap between the side surface of the first structural member and the end surface of the second structural member, whereby fastening can be performed more securely.

Moreover, according to the fastener of Claim 2, with regard to the fastener as claimed in Claim 1, the second structural member is disposed with existence of a gap from the first structural member, and the first bracket is protrusively provided with an insertion part to be inserted into the gap. Therefore, the above effects can be achieved with more certainty.

Moreover, according to the fastener of Claim 3, with regard to the fastener as claimed in Claim 2, a recess is formed at a tip of the insertion part, and a base-closer part of the head of the second bracket is engaged with the recess. Therefore, the above effects can be achieved with more certainty.

Moreover, according to the fastener of Claim 4, with regard to the fastener as claimed in Claim 1, a nut is installed internally in a groove of the first structural member on a side of the first bracket, and the first bolt is screwed into the nut. Therefore, the above effects can be achieved with more certainty. Therefore, the above effects can be achieved with more certainty.

Moreover, according to the fastener of Claim 5, with regard to the fastener as claimed in Claim 1, a female thread part is provided in the second bracket, and the second bolt is screwed into the female thread part. Therefore, the above effects can be achieved with more certainty.

Moreover, according to the fastener of Claim 6, with regard to the fastener as claimed in Claim 1, a shaft part is protrusively provided on the second bracket, and the second bolt is screwed into the shaft part. Therefore, the above effects can be achieved with more certainty.

Moreover, according to the fastener of Claim 7, with regard to the fastener as claimed in Claim 1, each of the first structural member and the second structural member is in a square cross-sectional shape, and has a T-shaped groove formed in each of four sides. Therefore, the above effects can be achieved with more certainty.

And moreover, according to the fastener of Claim 8, with regard to the fastener as claimed in Claim 3, a tapered part is formed at a bottom of the recess, a protrusion is formed on the second bracket to be engaged with the recess, and another tapered part is formed in the protrusion to be engaged with the tapered part, and because of synergetic effect by each of the tapered parts, the insertion parts and the second brackets are caused to be drawn toward each other. Therefore, with this configuration, it is also possible to achieve fastening state more securely.

### BRIEF DESCRIPTION OF DRAWINGS

[Figure 1] Fig. 1 are views showing a first embodiment of the present invention, in which, Fig. 1 (a) is a plan view showing a state that a second structural member is coupled with a first structural member from an orthogonal direction via a fastener, and Fig. 1 (b) is a front view showing a state that the second structural member is coupled with the first structural member from the orthogonal direction via the fastener.
[Figure 2] Fig. 2 are views showing the first embodiment of the present invention, in which, Fig. 2 (a) is a cross-sectional view as seen from IIa - IIa of Fig. 1 (a), Fig. 2 (b) is a cross-sectional view as seen from IIb - IIb of Fig. 1 (b), Fig. 2 (c) is a cross-sectional view as seen from IIc - IIc of Fig. 1 (b), and Fig. 2 (d) is an expanded view of a part IId of Fig. 2 (a).
[Figure 3] Fig. 3 are views showing the first embodiment of the present invention, in which, Fig. 3 (a) is a front view of a first bracket, Fig. 3 (b) is a left side view of the first bracket, Fig. 3 (c) is a right side view of the first bracket, Fig. 3 (d) is a bottom view of the first bracket, and Fig. 3 (e) is a perspective view of the first bracket.
[Figure 4] Fig. 4 are views showing the first embodiment of the present invention, in which, Fig. 4 (a) is a front view of a second bracket, Fig. 4 (b) is a front view of the second bracket, Fig. 4 (c) is a left side view of the second bracket, Fig. 4 (d) is a right side view of the second bracket, Fig. 4 (e) is a cross-sectional view as seen from IVe - IVe of Fig. 4 (b), and Fig. 4 (f) is a perspective view of the second bracket.
[Figure 5] Fig. 5 is a cross-sectional view showing a state that a second structural member is fastened to a first structural member via a fastener according to a second embodiment of the present invention.

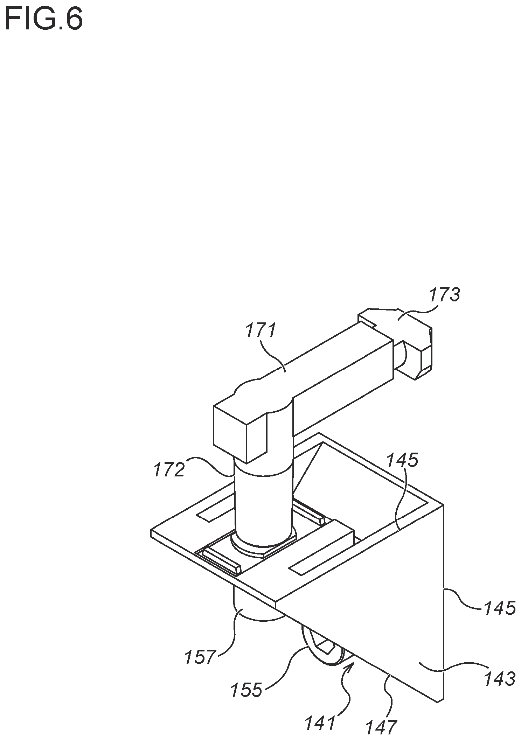

[Figure 6] Fig. 6 is a perspective view of the fastener according to the second embodiment of the present invention.
[Figure 7] Fig. 7 is a cross-sectional view of the fastener according to the second embodiment of the present invention.

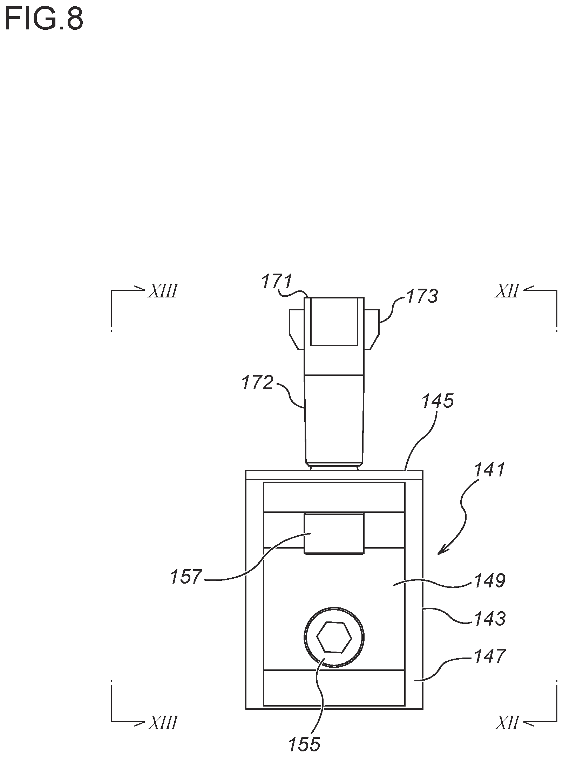

[Figure 8] Fig. 8 is a view as seen from arrows VIII - VIII of Fig. 7 according to the second embodiment of the present invention.

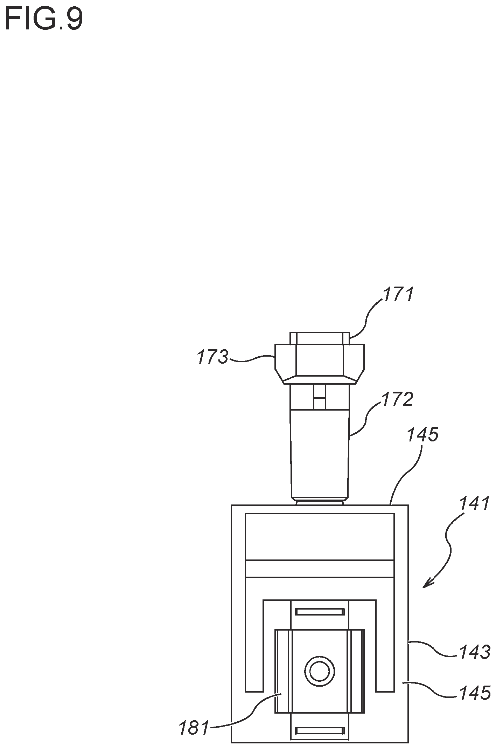

[Figure 9] Fig. 9 is a view as seen from arrows IX - IX of Fig. 7 according to the second embodiment of the present invention.

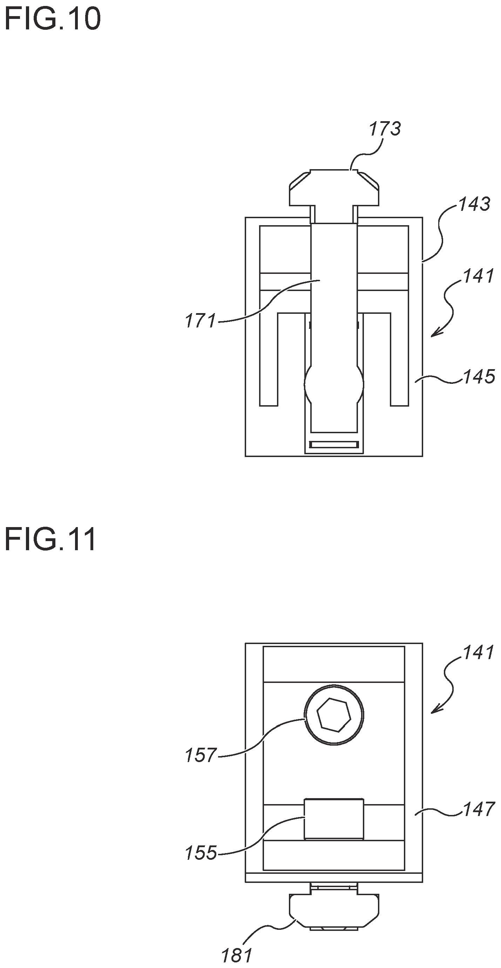

[Figure 10] Fig. 10 is a view as seen from arrows X - X of Fig. 7 according to the second embodiment of the present invention.
[Figure 11] Fig. 11 is a view as seen from arrows XI - XI of Fig. 7 according to the second embodiment of the present invention.
[Figure 12] Fig. 12 is a view as seen from arrows XII - XII of Fig. 8 according to the second embodiment of the present invention.
[Figure 13] Fig. 13 is a view as seen from arrows XIII - XIII of Fig. 8 according to the second embodiment of the present invention.

### MODE(S) FOR CARRYING OUT THE INVENTION

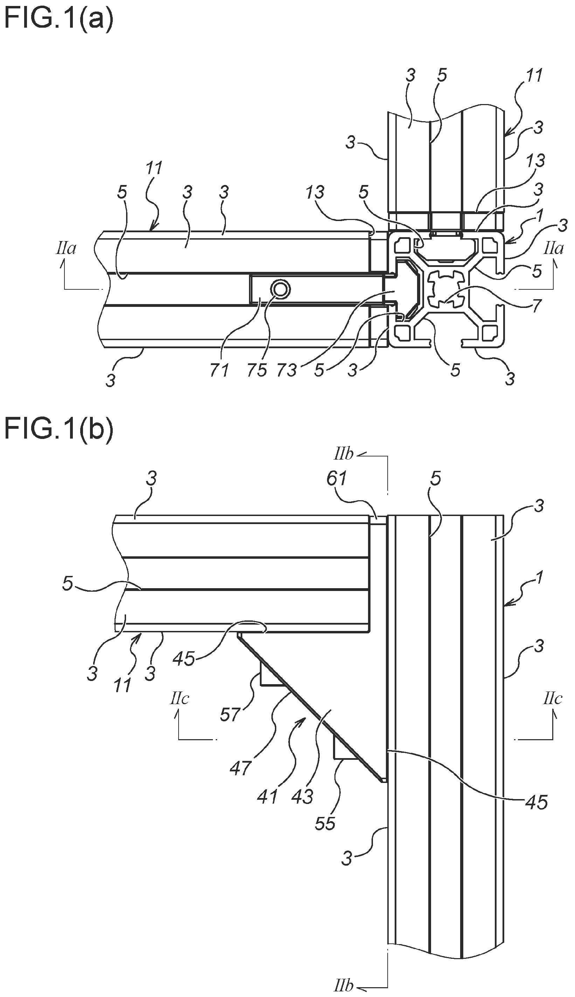

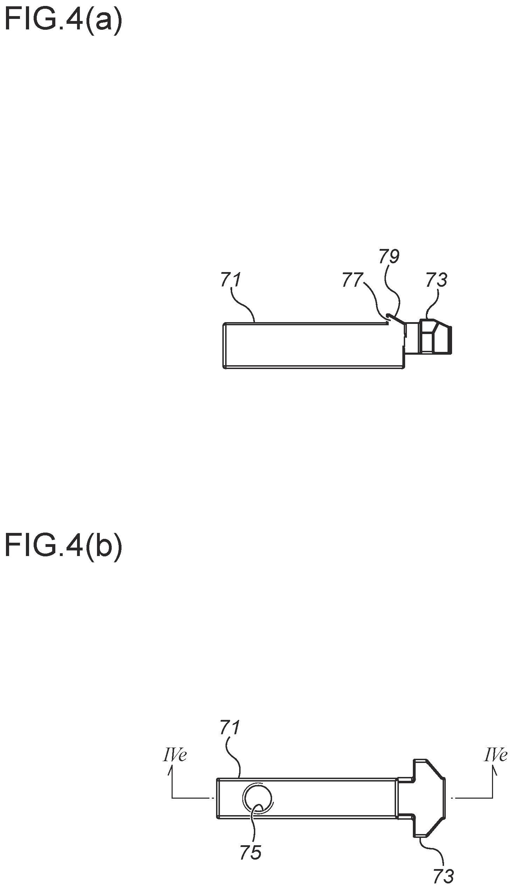

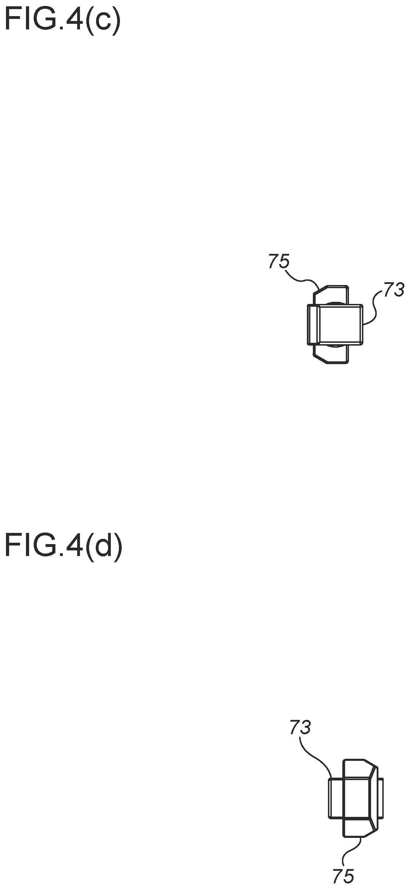

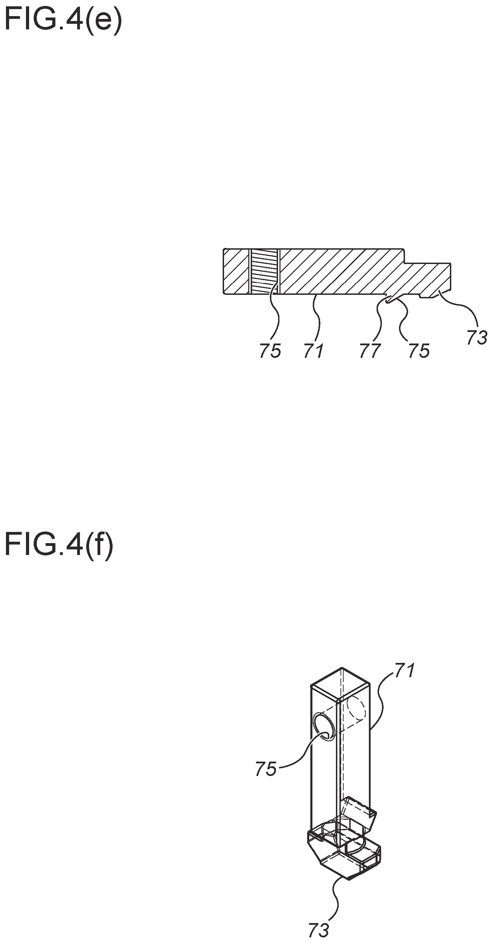

Now, a first embodiment of the present invention will be explained with reference to Fig. 1 and Fig. 4.

First, there is a first structural member 1, and the cross-section of the first structural member 1 is in a square shape. Each of four sides 3, 3, 3, 3 of the square has each of corresponding T-grooves 5, 5, 5, 5, respectively formed to extend in a longitudinal direction. Moreover, the center of the square has a through hole 7 formed to extend in the longitudinal direction.

A second structural member 11 is disposed from a direction orthogonal to the first structural member 1, with existence of a gap 13. Moreover, another second structural member 11 is disposed from a direction orthogonal to the first structural member 1, also with the existence of the gap 13. Each of the second structural member 11 has the same configuration as that of the first structural member 1. Therefore, the same reference signs will be allotted to the same elements in the drawings, and the explanation thereof will be omitted.

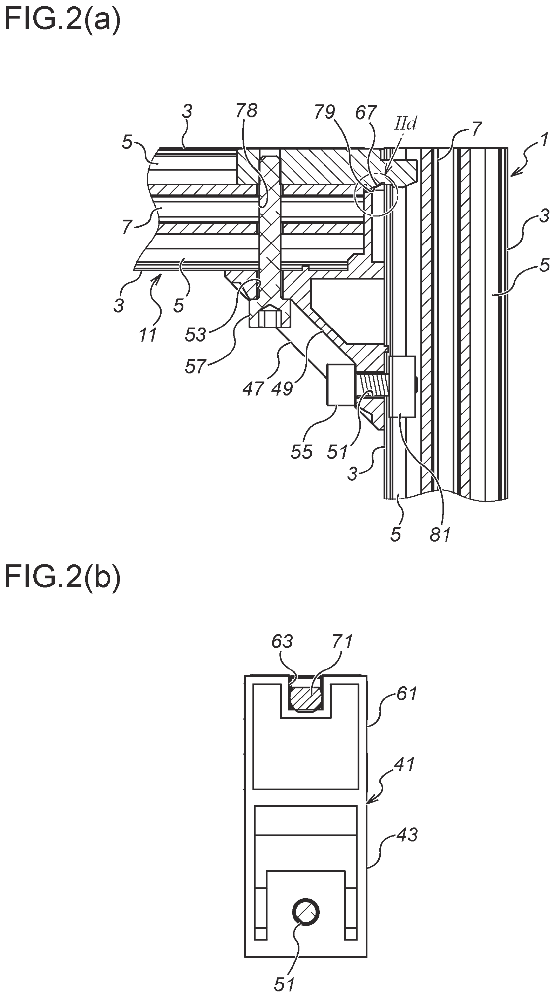

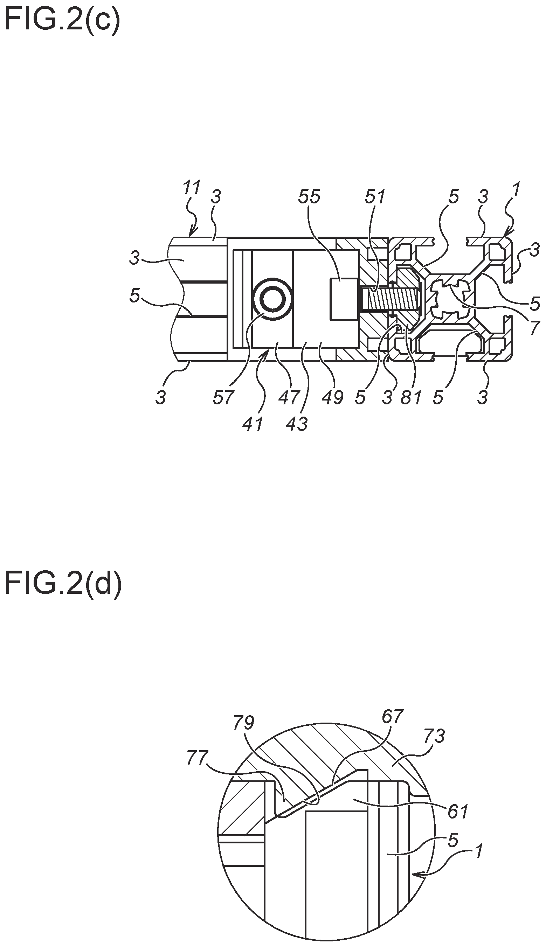

As illustrated in Fig. 1 (b) and Fig. 2, the first structural member 1 and the second structural member 11 are fastened and fixed to each other by a fastening fitting (fastener) 41. The fastening fitting 41 has a configuration as explained below.

First, a first bracket 43 is provided at a corner section between the first structural member 1 and the second structural member 11. The first bracket 43 is substantially in a triangular shape as seen from the front view of Fig. 1 (b), of which pair of oblique sides 45, 45 abut the corresponding sides 3, 3 of the first structural member 1 and the second structural member 11, respectively. As illustrated in Fig. 2 (a), a recess 49 is formed in a base 47 of the triangle of the first bracket 43, and through holes 51, 53 are formed in respective predetermined positions of the recess 49. A first bolt 55 and a second bolt 57 are inserted, respectively, into the through hole 51 and the through hole 53.

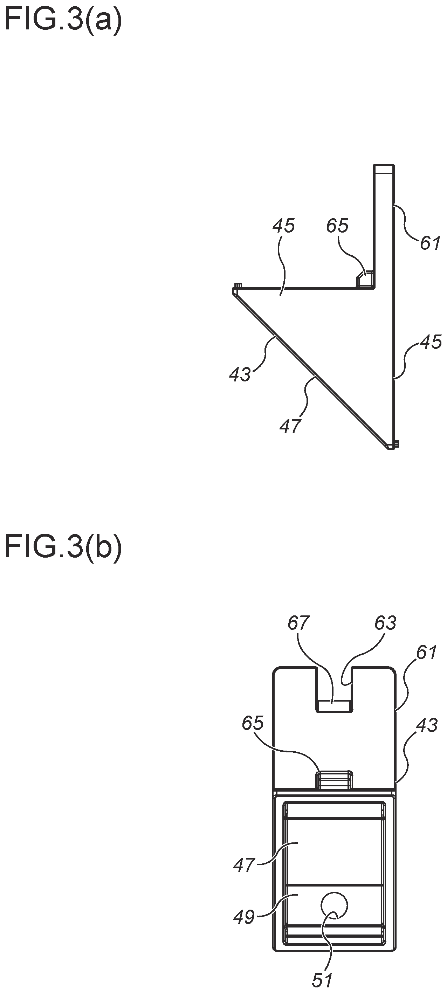

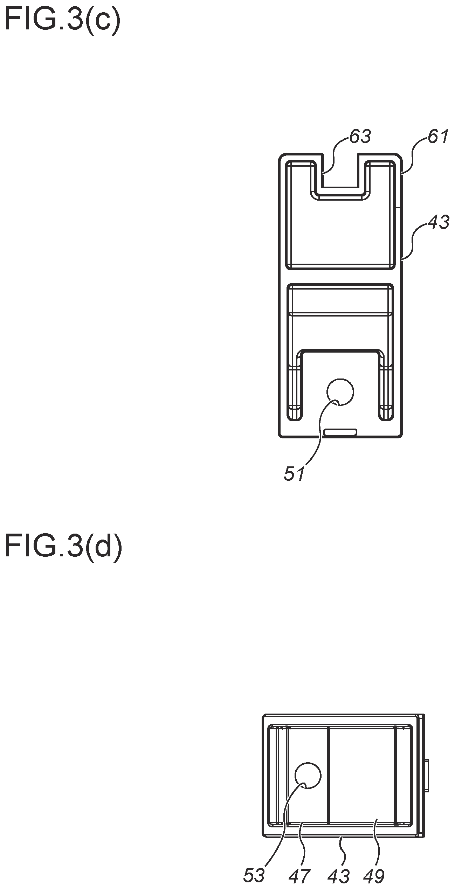

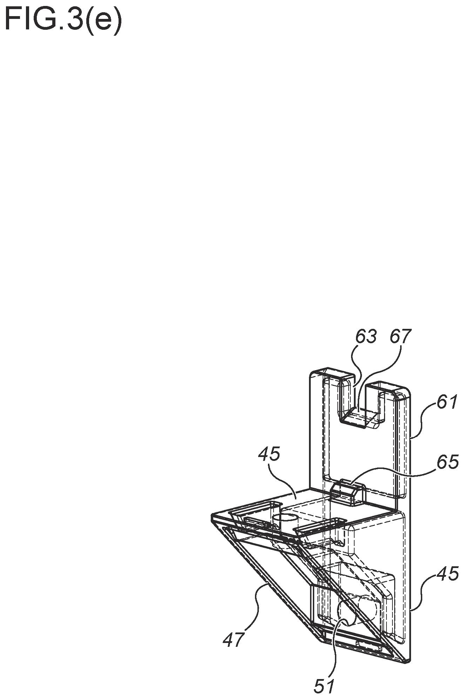

An insertion part 61 is protrusively provided on the first bracket 43, and the insertion part 61 is inserted into the gap 13. As illustrated in Fig. 3. the insertion part 61 is in a shape of a plate, and a recess 63 is formed at a center of a tip of the insertion part 61. Moreover, a protrusion 65 is protrusively provided at a center of a base end part of the insertion part 63. A tapered part 67 is formed at a bottom of the recess 63.

A second bracket 71 is inserted into an inside of the T-shaped groove 5 of the side 3 on an upper side of the second structural member 11 as seen from Fig. 1 (a). A head 73 is provided at a tip of the second bracket 71, and the head 73 is engaged with an inside of the T-groove 5 at an end surface of the first structural member 1. Moreover, a base-closer part of the head 73 of the second bracket 71 is engaged with the recess 63. Moreover, a female thread part 75 is formed in a base end part of the second bracket 71. A protrusion 77 is protrusively provided at the base-closer part of the head 73, and a tapered part 79 is provided in the protrusion 77. As illustrated in Fig. 2 (d), the tapered part 79 abuts the tapered part 67 on a side of the recess 63, and because of synergetic effect by each of the tapered parts 67 and 79, the insertion part 61 of the first bracket 47 and the second bracket 71 are caused to be drawn toward each other.

A T-shaped nut 81 is installed internally, at a predetermined position in an inside of the T-shaped groove 5 of the side 3 on a side of the first bracket 43 of the first structural member 1. The first bolt 55 is screwed into the T-shaped nut 81. Moreover, the second bolt 57 is screwed into the female thread part 75, passing through a through hole 78 provided in the second structural member 11. Moreover, the protrusion 65 is engaged with an end of the T-shaped groove 5 formed in the side 3 on the side of the first bracket 43 of the second structural member 11.

Note that, each of the two second structural members 11, 11, as shown at corresponding two positions of Fig. 1 (a), is fastened and fixed by fastening structure described above.

The functions of the first embodiment will be explained based on the configuration described above.

First, the first bolt 55 is screwed into the T-shaped nut 81, installed internally in the T-shaped groove 5 of the side 3 of the first structural member 1, by passing through the through hole 51 of the first bracket 43. Consequently, the oblique side 45 of the first bracket 43 becomes in tight contact with and fixed on the side 3 of the first structural member 1.

Moreover, the second bolt 57 is screwed into the female thread part 75 of the second bracket 71, by passing through the through hole 53 of the first bracket 43 and the through hole 77 of the second structural member 11. Consequently, the oblique side 45 of the first bracket 43 becomes in tight contact with and fixed on the side 3 of the second structural member 11.

And moreover, with the screw engagement of the second bolt 57 with the female thread part 75 of the second bracket 71 by passing through the through hole 53 of the first bracket 43 and the through hole 78 of the second structural member 11, and also with the engagement of the head 73 of the second bracket 71 with the inside of the T-shaped groove 5 at the end surface of the first structural member 1, the tight contact state among the second structural member 11, the insertion part 61 of the first bracket 43, and the first structural member 1, is bindingly retained.

The present embodiment described above has the following effects.

First, the first structural member 1 and the second structural member 11 can be fastened and fixed to each other more securely, via the fastener 41.

This is because, the first bolt 55 is screwed into the T-shaped nut 81, installed internally in the T-shaped groove 5 of the side 3 of the first structural member 1, by passing through the through hole 51 of the first bracket 43, whereby the oblique side 45 of the first bracket 43 becomes in tight contact with and fixed on the side 3 of the first structural member 1, and furthermore, the second bolt 57 is screwed into the female thread part 75 of the second bracket 71, by passing through the through hole 53 of the first bracket 43 and the through hole 78 of the second structural member 11, whereby the oblique side 45 of the first bracket 43 becomes in tight contact with and fixed on the side 3 of the second structural member 11, and furthermore, with the screw engagement of the second bolt 57 with the female thread part 75 of the second bracket 71 by passing through the through hole 53 of the first bracket 43 and the through hole 78 of the second structural member 11, and also with the engagement of the head 73 of the second bracket 71 with the inside of the T-shaped groove 5 at the end surface of the first structural member 1, the tight contact state among the second structural member 11, the insertion part 61 of the first bracket 43, and the first structural member 1, is bindingly retained.

Moreover, the protrusion 77 is protrusively provided at the base-closer part of the head 73, and the tapered part 79 is provided in the protrusion 77. As illustrated in Fig. 2 (d), the tapered part 79 abuts the tapered part 67 on a side of the recess 63, and because of synergetic effect by each of the tapered parts 67 and 79, the insertion part 61 of the first bracket 47 and the second bracket 71 are caused to be drawn toward each other. Consequently, it is possible to achieve fastening and fixing state more securely.

And moreover, the fastener 41 may be composed by small number of parts and simple structure, and therefore, the parts management can be facilitated.

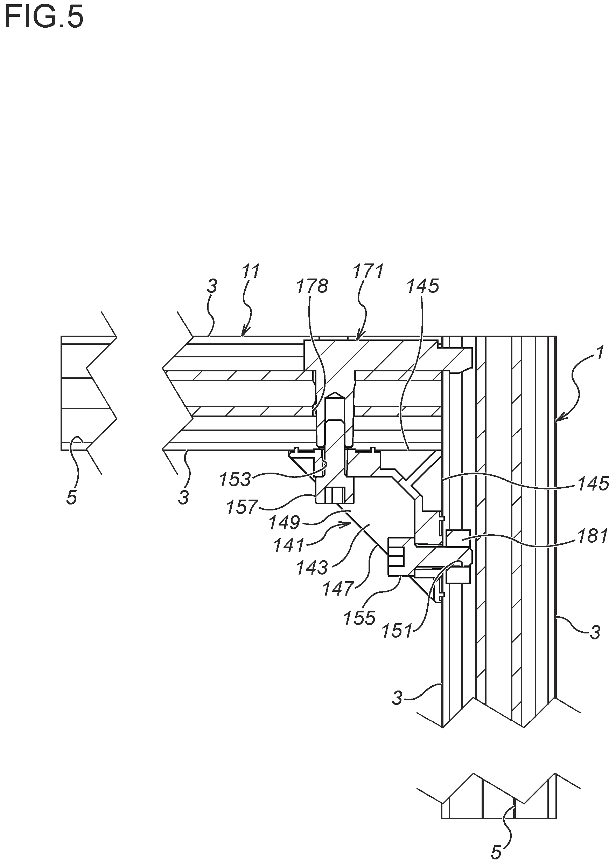

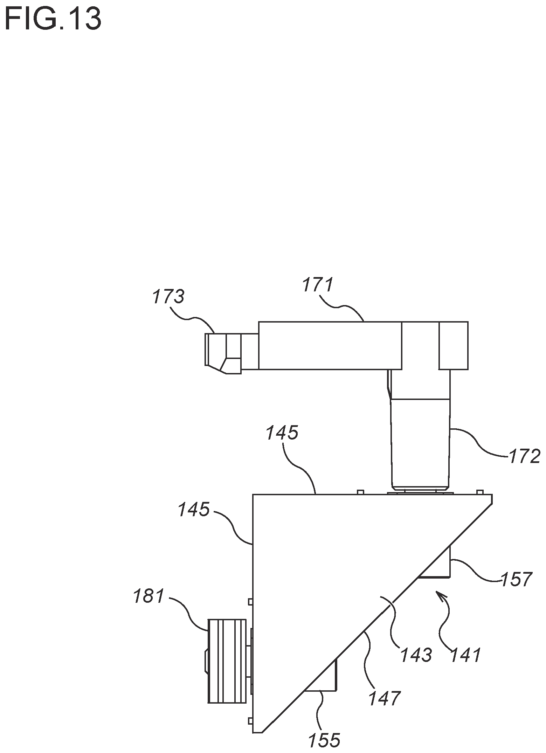

Next, a second embodiment of the present invention will be explained with reference to Fig. 5 and Fig. 13. In the second embodiment, the first structural member 1 and the second structural member 11 are substantially the same as those that have already explained in the first embodiment, and therefore, the same reference signs will be allotted to the same elements in the drawings, and the explanation thereof will be omitted.

As illustrated in Fig. 5, the first structural member 1 and the second structural member 11 are fastened and fixed to each other by a fastening fitting 141. The fastening fitting 141 has a configuration as explained below.

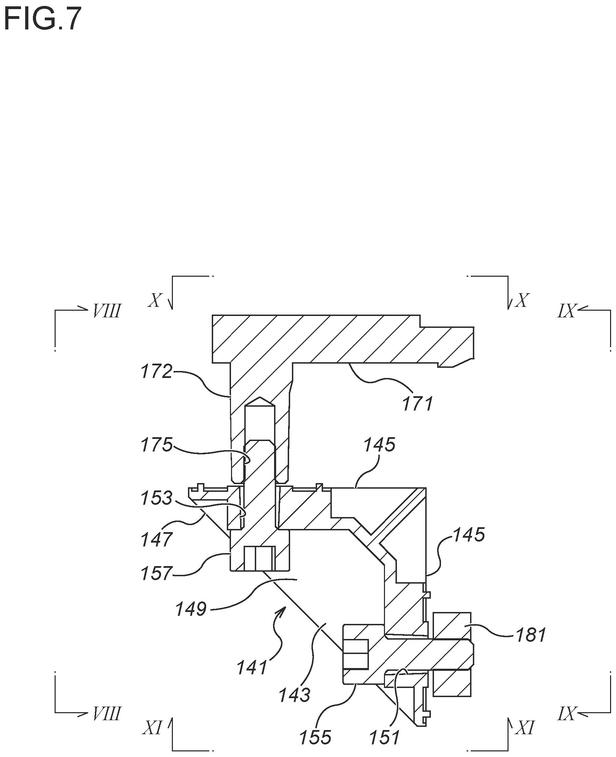

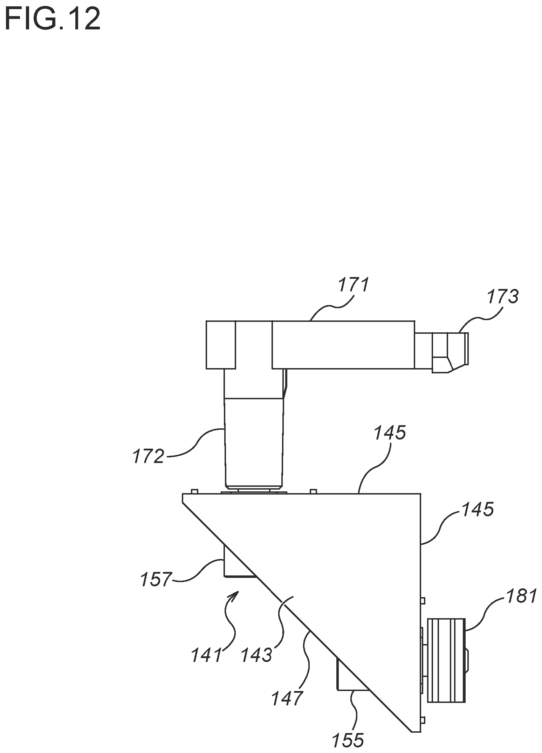

First, a first bracket 143 is provided at the corner section between the first structural member 1 and the second structural member 11. The first bracket 143 is substantially in a triangular shape as seen from Fig. 12, of which pair of oblique sides 145, 145 abut the corresponding sides 3, 3 of the first structural member 1 and the second structural member 11, respectively. As illustrated in Fig. 5 and Fig. 7, a recess 149 is formed in a base 147 of the triangle of the first bracket 143, and through holes 151, 153 are formed in respective predetermined positions of the recess 149. A first bolt 155 and a second bolt 157 are inserted, respectively, into the through hole 151 and the through hole 153.

A second bracket 171 is inserted into the inside of the T-shaped groove 5 of the side 3 on the upper side of the second structural member 11 as seen from Fig. 5. A head 173 is provided at a tip of the second bracket 171, and the head 173 is engaged with the inside of the T-groove 5 at the end surface of the first structural member 1. Moreover, a shaft part 172 is protrusively provided at a base end part of the second bracket 171 from an orthogonal direction, and the shaft part 172 is inserted into a through hole 178 provided in the second structural member 11. A female thread part 175 is formed in the shaft part 172.

A T-shaped nut 181 is installed internally, at a predetermined position in the inside of the T-shaped groove 5 of the side 3 on a side of the first bracket 43 of the first structural member 1. The first bolt 155 is screwed into the T-shaped nut 181. Moreover, the second bolt 157 is screwed into the female thread part 175 of the shaft part 172 of the second bracket 171.

The functions of the second embodiment will be explained based on the configuration described above.

First, the first bolt 155 is screwed into the T-shaped nut 181, installed internally in the T-shaped groove 5 of the side 3 of the first structural member 1, by passing through the through hole 151 of the first bracket 143. Consequently, the oblique side 145 of the first bracket 143 becomes in tight contact with and fixed on the side 3 of the first structural member 1.

Moreover, the second bolt 157 is screwed into the female thread part 175 of the shaft part 172 of the second bracket 171, by passing through the through hole 153 of the first bracket 143. Consequently, the oblique side 45 of the first bracket 143 becomes in tight contact with and fixed on the side 3 of the second structural member 11.

And moreover, with the screw engagement of the second bolt 157 with the female thread part 175 of the shaft part 172 of the second bracket 171 by passing through the through hole 153 of the first bracket 143, and also with the engagement of the head 173 of the second bracket 171 with the inside of the T-shaped groove 5 at the end surface of the first structural member 1, the tight contact state between the second structural member 11 and the first structural member 1 is bindingly retained.

Accordingly, it is possible to achieve the same effects as those of the first embodiment described above.

Moreover, it is possible to form the shape of the first bracket 143 in a simpler manner.

Note that, the present invention is not limited to the first and the second embodiments described above.

First, the first structural member and the second structural member are not limited to the configurations illustrated in the drawings, and it is possible to envisage various modified configurations.

Moreover, the first bracket and the second bracket are not limited to the shapes illustrated in the drawings, and it is possible to envisage various modified shapes.

Furthermore, the configurations in the drawings are shown for the illustrative purpose only.

### INDUSTRIAL APPLICABILITY

The present invention relates to a fastener used when coupling a second structural member provided with a groove, with a first structural member provided with a groove, from an orthogonal direction, and in particular, the present invention relates to the fastener that allows fastening more securely. The present invention may be suitably applied, for example, to coupling of column members and/or bean members.

### EXPLANATION OF REFERENCE NUMERALS AND SIGNS

- 1: First structural member
- 3: Side
- 5: T-shaped groove (Groove)
- 11: Second structural member
- 13: Gap
- 41: Fastener
- 43: First bracket
- 55: First bolt
- 57: Second bolt
- 61: Insertion part
- 63: Recess
- 71: Second bracket
- 73: Head
- 75: Female thread part
- 81: T-shaped nut

## Claims

1. A fastener for coupling a first structural member, in a quadrilateral cross-sectional shape and having a groove formed in each of sides of the first structural member, with a second structural member, similarly in a quadrilateral cross-sectional shape and having a groove formed in each of sides of the second structural member, in an arrangement that the second structural member is disposed from a direction orthogonal to the first structural member, wherein the fastener is provided with:
a first bracket provided at a corner section between the first structural member and the second structural member;
a second bracket, inserted into the groove of the second structural member, and of which head is engaged with the groove at an end surface of the first structural member;
a first bolt screwed from a side of the first bracket side into a side of the first structural member; and
a second bolt screwed from a side of the first bracket into a side of the second bracket through the second structural member.

2. The fastener as claimed in Claim 1, wherein:
the second structural member is disposed with existence of a gap from the first structural member; and
the first bracket is protrusively provided with an insertion part to be inserted into the gap.

3. The fastener as claimed in Claim 2, wherein:
a recess is formed at a tip of the insertion part, and a base-closer part of the head of the second bracket is engaged with the recess.

4. The fastener as claimed in Claim 1, wherein:
a nut is installed internally in a groove of the first structural member on a side of the first bracket, and the first bolt is screwed into the nut.

5. The fastener as claimed in Claim 1, wherein:
a female thread part is provided in the second bracket, and the second bolt is screwed into the female thread part.

6. The fastener as claimed in Claim 1, wherein:
a shaft part is protrusively provided on the second bracket, and the second bolt is screwed into the shaft part.

7. The fastener as claimed in Claim 1, wherein:
each of the first structural member and the second structural member is in a square cross-sectional shape, and has a T-shaped groove formed in each of four sides.

8. The fastener as claimed in Claim 3, wherein:
a tapered part is formed at a bottom of the recess, a protrusion is formed on the second bracket to be engaged with the recess, and another tapered part is formed in the protrusion to be engaged with the tapered part, and because of synergetic effect by each of the tapered parts, the insertion parts and the second brackets are caused to be drawn toward each other.
